# EUROPÄISCHE PATENTSCHRIFT

(11) **EP 0 598 313 B1**
(45) Veröffentlichungstag und Bekanntmachung des Hinweises auf die Patenterteilung: **13.05.1998**
(21) Anmeldenummer: 93118152.3
(22) Anmeldetag: 09.11.1993
(51) Int. Cl.: D06M 10/02, D06M 17/00, A41D 27/06, B32B 31/12

(54) **Verfahren und Vorrichtung zum Verbinden textiler Flächengebilde**
Method and apparatus for binding textile surfaces
Procédé et appareil pour lier des surfaces textiles

(30) Priorität: 09.11.1992 DE 4237722
(43) Veröffentlichungstag der Anmeldung: 25.05.1994
(73) Patentinhaber: HERBERT KANNEGIESSER GMBH + CO., D-32602 Vlotho (DE)
(72) Erfinder: Jürgen, Inselmann, D-32584 Löhne (DE); Albrecht, Kaiser, D-32602 Vlotho (DE)
(74) Vertreter: Möller, Friedrich, Dipl.-Ing.

(56) Entgegenhaltungen:
- EP-A- 0 177 364
- EP-A- 0 192 510
- EP-A- 0 362 059
- DE-A- 3 312 432
- GB-A- 2 134 447
- DATABASE WPI Week 8521, Derwent Publications Ltd., London, GB; AN 85-126301 & JP-A-60 065 183 (UNITIKA) 13. April 1985

## Beschreibung

Die Erfindung betrifft ein Verfahren zum Verbinden textiler Flächengebilde gemäß dem Oberbegriff des Anspruchs 1 und eine entsprechende Vorrichtung gemäß dem Oberbegriff des Anspruchs 11.

Zur Herstellung von Bekleidungsstücken, insbesondere Oberbekleidungsstücken, werden Verklebungseinheiten aus miteinander verbundenen textilen Flächengebilden, insbesondere Oberstoffzuschnitten und Einlagenzuschnitten, verwendet. Aus der GB-A-2 134 447 ist es bekannt, die Zuschnitte unter Anwendung von Wärme und Druck miteinander zu verbinden. Diese Verbindung erfolgt durch Kleben, indem Klebeschichten der Einlagenzuschnitte aktiviert und dadurch die Einlagenzuschnitte mit den Oberstoffzuschnitten verbunden werden.

Zunehmend werden für Oberbekleidungsstücke Gewebe oder Gewebebeschichtungen (Ausrüstungen) verwendet, die die Verbindung, insbesondere Verklebung, der Oberstoffzuschnitte mit den Einlagenzuschnitten erschweren oder beeinträchtigen. Das führt dazu, daß die Qualität der Bekleidungsstücke leidet, indem sich mit der Zeit, insbesondere beim Reinigen oder dergleichen, die Einlagenzuschnitte von den Oberstoffzuschnitten lösen.

Hiervon ausgehen liegt der Erfindung die Aufgabe zugrunde, ein Verfahren und eine Vorrichtung der eingangs genannten Art zu schaffen, womit sich Zuschnitte aus schwer verbindbaren Materialien in wirtschaftlicher Weise zuverlässig verbinden lassen.

Ein Verfahren zur Lösung dieser Aufgabe weist die Maßnahmen des Anspruchs 1 auf. Es hat sich gezeigt, daß nach einer in einem Luftspalt erfolgenden Vorbehandlung mit ionisierten Gasen, einer Korona oder einem Plasma, wie es gründsätzlich aus der EP-A-O 177 364 im Zusammenhang mit der beidseitigen, wasserdichten Polymerbeschichtung eines Gewebes bekannt ist, auch textile Flächengebilde sich zuverlässig und dauerhaft, vorzugsweise durch Kleben, verbinden lassen. Der Luftspalt bremst die Elektronen ab, so daß sie mit einer solchen (Rest-)Energie auf die textilen Flächengebilde auftreffen, daß Beeinträchtigungen des sensiblen Materials insbesondere der Oberstoffzuschnitte nicht zu befürchten sind.

Bei der Korona- oder Plasma-Vorbehandlung der zu verbindenden textilen Flächengebilde erfolgt eine Beaufschlagung der textilen Flächengebilde mit Elektronen, die die Oberfläche der Materialien bzw. Beschichtung (Ausrüstung) so verändern, daß der zum Aufkleben der Einlagenzuschnitte dienende Kleber, insbesondere wärmeaktivierbare Kleber, fest auf den Oberstoffzuschnitten haftet.

Durch das Niederhalten textiler Flächengebilde bei der Korona- oder Plasma-Vorbehandlung wird verhindert, daß sich die textilen Flächengebilde bei der Vorbehandlung von ihrer Unterlage randseitig abheben oder sich eine Faltenbildung einstellt. Vielmehr werden die textilen Flächengebilde in einer geradelinigen oder gewölbten Ebene gehalten, in der sie bei der Vorbehandlung stets den gleichen Abstand zu den zur Koronabildung dienenden Elektroden aufweisen, wodurch eine gleichmäßige und beschädigungslose Vorbehandlung gewährleitstet ist.

Nach einem bevorzugten Verfahren werden die zu behandelnden textilen Flächengebilde mit einer räumlichen Korona- oder Plasmawolke vorbehandelt. Diese ist so auf die vorzubehandelnden Flächengebilde abgestimmt, daß eine homogene Verteilung der Elektronen in der Koronawolke gegeben ist, so daß partielle Ladungsverdichtungen, die zu einer Beschädigung der vorzubehandelnden textilen Flächengebilde führen könnten, ausgeschlossen werden.

Vorzugsweise werden gleichzeitig alle textilen Flächengebilde einer jeweiligen Verklebungseinheit, nämlich ein Oberstoffzuschnitt und mindestens ein darauf aufgelegter Einlagenzuschnitt, zusammen der Korona- oder Plasma-Vorbehandlung unterzogen. Die Vorbehandlung erfordert dadurch keinen zusätzlichen manuellen Aufwand, weil die beiden Zuschnitte nach ihrem Zusammenlegen durch die Vorbehandlungsstation und die Verklebungspresse oder dergleichen gefördert werden können.

In besonderen Fällen kann es zweckmäßig sein, nur einen Zuschnitt, insbesondere den Oberstoffzuschnitt, der Korona- bzw. Plasma-Behandlung zu unterziehen. Dadurch brauchen die Einlagenzuschnitte, die üblicherweise aus einem problemlos zu verklebenden Material bestehen, nicht behandelt zu werden. Sie stören daher nicht bei der Behandlung des Oberstoffzuschnitts, welcher somit einer gezielten intensiven Vorbehandlung unterzogen werden kann. Auch wird der Kleber von der Vorbehandlung nicht beeinträchtigt.

Bei einer bevorzugten Weiterbildung des Verfahrens werden die textilen Flächengebilde vor ihrer Verklebung erwärmt, insbesondere vorgewärmt. Die Erwärmung erfolgt insbesondere im Bereich der Vorbehandlung durch eine Korona bzw. ein Plasma. Alternativ oder zusätzlich kann die Erwärmung auch vor und/oder nach der Korona- bzw. Plasma-Behandlung erfolgen. Durch die Erwärmung bzw. Vorwärmung wir die Haftmasse zum Verkleben der textilen Flächengebilde punktuell plastifiziert. Durch die anschließende Entladung der Elektroden im Korona- oder Plasma-Spalt entsteht eine Aufprallkraft, die zu einer leichten Vorverklebung der textilen Flächengebilde führt. Das hat zur Folge, daß nach der Korona- oder Plasma-Behandlung der textilen Flächengebilde, und zwar insbesondere die Einlagen nicht mehr randseitig aufrollen können. Die Einlagen werden praktisch am Oberstoffzuschnitt gehalten. Es kann dadurch zu keiner nachteiligen Beeinflussung der textilen Flächengebilde beim Weitertransport in die nachfolgenden Behandlungseinrichtungen, insbesondere die Verklebungsstationen, in der die vollständige Verklebung der textilen Flächengebilde erfolgt, kommen.

Weitere vorteilhalfte Ausgestaltungen ergeben sich aus den Unteransprüchen.

Die Erfindung besteht weiterhin in der Verwendung ionisierter Gase, insbesondere einer Korona oder dergleichen, zur Vorbehandlung von vorzugsweise mit Einlagenzuschnitten zu verklebenden Oberstoffzuschnitten für Oberbekleidungsstücke. Überraschenderweise hat sich gezeigt, daß eine solche Vorbehandlung der Zuschnitte ohne irgendwelche negativen Beeinträchtigungen derselben zu einer Haftverbesserung bei der Verklebung insofern problematischer Zuschnitte führt.

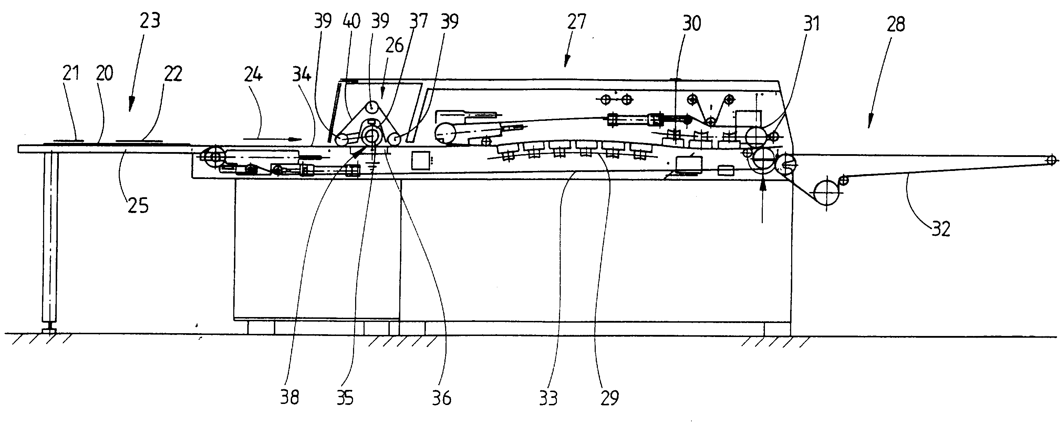

Ein bevorzugtes Ausführungsbeispiel der Erfindung wird nachfolgend anhand der Zeichnung näher erläutert. Die (einzige) Figur der Zeichnung zeigt:
eine Seitenansicht einer teilweise im Schnitt dargstellten Vorrichtung.

Die im folgenden beschriebenen Vorrichtungen und Verfahren dienen zum Verkleben textiler Flächengebilde für Bekleidungsstücke, und zwar insbesondere Oberbekleidungsstücke. Es werden jeweils mindestens zwei Zuschnitte, nämlich ein Oberstoffzuschnitt und ein oder mehrere kleinere Einlagenzuschnitte, miteinander verklebt zu einer Verklebungseinheit. Soweit mehrere Einlagenzuschnitte für eine Verklebungseinheit vorgesehen sind, sind diese ohne einander zu überlappen auf verschiedenen Stellen des Oberstoffzuschnitts angeordnet. Die Verklebungseinheiten sind daher ganz oder teilweise zweilagig.

Die Zeichnung zeigt eine im Fachjargon als Verklebungspresse bezeichnete Vorrichtung, bei der Oberstoffzuschnitte 20 und Einlagenzuschnitte 21 und 22 entlang einer geradelinigen Förderstrecke in der durch einen Pfeil angedeuteten Behandlungseinrichtung 24 transportiert und miteinander zu Verklebungseinheiten 23 verklebt werden. Die Vorrichtung verfügt über die folgenden in Behandlungrichtung 24 aufeinanderfolgenden Stationen: Anlegestation 25, Vorbehandlungsstation 26, Verklebungsstation 27 und Kühlstation 28.

In der Anlegestation 25 werden die zu verklebenden Zuschnitte vorkonfektioniert, indem von entsprechenden Vorratsstapeln eine Bedienungsperson jeweils einen Oberstoffzuschnitt 20 entnimmt und auf diesen an der entsprechenden Stelle den Einlagenzuschnitt 21 oder die Einlagenzuschnitte 21, 22 lose auflegt. Die jeweils so vorkonfektionierte (noch unverklebte) Verklebungseinheit 23 wird in die Vorbehandlungsstation 26 gefördert. In dieser findet eine Vorbehandlung der zu verklebenden Zuschnitte durch ein ganz oder teilweise ionisiertes Gas, insbesondere eine Korona- oder Plasma-Behandlung, statt. Anschließend werden die vorbehandelten Oberstoffzuschnitte 20 und Einlagenzuschnitte 21, 22 zur Bildung der fertigen Verklebungseinheit 23 miteinander (vollständig) verklebt in der Verklebungsstation 27. In dieser werden die Oberstoffzuschnitte 20 und Einlagenzuschnitte 21, 22 zwischen Heizplatten 29, 30 erwärmt und anschließend zwischen einer aus gegenüberliegenden Walzen gebildeten Druckeinrichtung 31 linienförmig mit Druck beaufschlagt. Der Aufbau der Verklebungsstation 27 kann der aus DE-A-33 03 504 bzw. DE-A-37 34 297 bekannten Verklebungspresse entsprechen, worauf vollständig Bezug genommen wird. Die auf die Verklebungsstation 27 folgende Kühlstation 28 ist als umlaufender Gurtförderer 32 ausgebildet. Während des Weitertransports auf dem Obertrum des Gurtförderers 32 kühlen die fertig verklebten Verklebungseinheiten 23 ab, bevor sie von hier aus weitertransportiert werden.

Mittels eines vorzugsweise kontinuierlich angetriebenen Gurtförderers 33 werden die vorkonfektionierten Verklebungseinheiten 23 von der Anlegestation 25 durch die Vorbehandlungsstation 26 und die Verklebungsstation 27 transportiert und an den Gurtförderer 32 der Kühlstation 28 übergeben. Der Gurtförderer 33 erstreckt sich daher durchgehend von der Anlegestation 25 über die Vorbehandlungsstation 26 zur Verklebungsstation 27. Die vorkonfektionierten Verklebungseinheiten 23 liegen dabei auf dem durchgehenden Obertrum 34 des Gurtförderers 33 auf.

Die Vorbehandlungsstation 26 verfügt zur Korona- bzw. Plasma-Behandlung über zwei gegenüberliegenden Seiten des Obertrums 34 des Gurtförderers 33 zugeordnete Elektroden, nämlich eine über dem Obertrum 34 angeordnete positive Elektrode 35 und eine unter dem Obertrum 34 angeordnete negative Elektrode 36. Beide erstrecken sich etwa über die gesamte Breite des Gurtförderers 33. Die obenliegende positive Elektrode 35 ist als eine drehbare, jedoch nicht angetriebene Walze ausgebildet, deren Mantel vollständig nichtleitend ausgebildet ist durch beispielsweise eine schlauchförmige Ummantelung 37 aus einem nichtleitenden Material. Die Ummantelung 37 bildet ein die positive Elektrode 35 vollständig umgebendes Dielektrikum. Die negative Elektrode 36 unterhalb des Obertrums 34 ist als eine ebene Platte aus leitendem Material gebildet. Diese ist feststehend unter dem Obertrum 34 angeordnet. Auf der plattenförmigen negativen Elektrode 36 läuft das Obertrum 34 des Gurtförderers 33 entlang. Das Obertrum 34 bildet dabei gleichzeitig das Dielektrikum der negativen plattenförmigen Elektrode 36. Dazu ist der Gurt des Gurtförderers 33 aus einem vollständig nichtleitenden Material gebildet.

Oberhalb des Obertrums 34, nämlich zwischen der positiven Elektrode 35 und der negativen Elektrode 36, ist ein Abdeckorgan angeordnet. Dieses dient dazu, die zu verklebenden Zuschnitte mindestens im Bereich der positiven Elektrode 35 plan zu halten bzw. eben auf das Obertrum 34 zu drücken. Dadurch wird gewährleistet, daß die Relativposition der vorzubehandelnden Zuschnitte zwischen den Elektroden 35 und 36 sich stets an einer gleichbleibenden, definierten Stelle im Spalt 38 zwischen den Elektroden 35 und 36 befindet.

Das Abdeckorgan ist gebildet aus einem umlaufenden Band 40, das um drei dreieckförmig zueinander positionierte Umlenkrollen 39 geführt ist. Das Band 40 ist vorzugsweise als Netzband aus einem nichtleitenden Material gebildet. Durch das Netzband wird ein Luftspalt über den vorzubehandelnden Zuschnitten gebildet.

Das Band 40 kann synchron zum Fördergurt des Gurtförderers 33 angetrieben sein durch einen entsprechenden Antrieb einer Umlenkrolle 39. Es ist aber auch denkbar, den parallel zum Obertrum 34 verlaufenden Abschnitt des Bandes 40 durch die beiden am Obertrum 34 anliegenden Umlenkrollen 39 derart gegen das Obertrum 34 zu drücken, daß das Band 40 vom angetriebenen Gurtförderer 33 mitgenommen wird. Ebenso ist es denkbar, die walzenförmige positive Elektrode 35 drehend anzutreiben, wobei das an der Ummantelung 37 der positiven Elektrode 35 anliegende Band 40 von der angetriebenen walzenförmigen Elektrode 35 mitnehmbar wäre.

Die vorstehend beschriebene Vorrichtung kann im Bereich der Vorbehandlungsstation 26 mit Mitteln zum Anwärmen bzw. Vorwärmen der Verklebungseinheiten 23 versehen sein. Darüber hinaus können alternativ oder zusätzlich zwischen der Vorbehandlungsstation 26 und der Verklebungsstation 27 Mittel zum Vorwärmen der Verklebungseinheiten 23 angeordnet sein. Bei den Mitteln zum Vorwärmen der Verklebungseinheiten 23 handelt es sich vorzugsweise um Heißlufterhitzer mit zum Beispiel einer Breitschlitzdüse, die sich über die gesamte Breite der Verklebungseinheiten 23 erstreckt und in der Nähe der Verklebungseinheiten mündet. Beispielsweise kann neben jeder unteren Umlenkrolle 39 für das Band 40 eine Breitschlitzdüse angeordnet sein. Durch die Breitschlitzdüsen erfolgt eine Vorwärmung der Verklebungseinheiten 23 derart, daß die zum Verkleben der Einlagenzuschnitte 21 und 22 mit den Oberstoffzuschnitten 20 dienende Kleberschicht punkteweise aktiviert wird zur Vorverklebung der Einlagenzuschnitte 21 und 22 mit dem Oberstoffzuschnitt 20. Diese Vorverklebung erfolgt vorzugsweise durch ein Wechselspiel der Vorwärmung mit der Korona- oder Plasma-Behandlung. Die Verklebungseinheiten 23 sind nach dem Verlassen der Vorbehandlungsstation 26 so weit vorverklebt, daß sie plan aufeinander liegenbleiben während des Weitertransports zur Verklebungsstation 27 und des Hindurchtritts durch die Verklebungsstation 27.

Die Vorverklebung findet statt durch Heißluft, die mit einer Temperatur von 80 bis 100° C in den Korona-Spalt geleitet wird. Die Temperatur ist derart regelbar, daß je nach Art der Einlagenzuschnitte 21 und 22 nur eine leichte Vorverklebung stattfindet, die ausreicht, die Einlagenzuschnitte 21 und 22 auf den Oberstoffzuschnitten 20 während des Weitertransports durch die Vorrichtung gegen Verrutschen und/oder randseitiges Aufrollen bzw. Aufwölben zu sichern.

Ein wesentlicher Aspekt der Erfindung bezieht sich auf die Wahl des Materials für das Dielektrikum und das Abdeckorgan, insbesondere die netzförmigen Gurte, Bahnen oder Bänder zur Bildung desselben. Wesentlich ist, daß sie allesamt aus einem nichtleitenden Material bestehen.

Soweit das Dielektrikum der negativen Elektroden durch einen Gurt eines Gurtförderers gebildet ist, bestehen diese aus einem Glasfasergewebe mit einer Polytetrafluorethylen-Beschichtung. Für das schlauchförmig die walzenförmige positive Elektrode umgebende Dielektrikum kommt insbesondere Silikonkunststoff in Betracht. Dieses ist üblicherweise auf die metallischen, leitenden Kerne der positiven Elektroden aufvulkanisiert. Es kann aber auch aufgeklebt oder aufgeschoben sein. Die Wanddicke des die walzenförmigen positiven Elektroden umgebenden Silikonschlauches beträgt etwa 3 bis 4 mm. Die Härte beträgt etwa 70 Shore.

Zur Bildung der Abdeckorgane dienen Gitter, Gurte oder Bahnen mit sich kreuzenden, vorzugsweise verwebten Strängen aus Kunststoff, insbesondere Polyester, oder Kohlefasern. Der Durchmesser der Fasern beträgt vorzugsweise 0,5 bis 1,5 mm. Die Maschenweite beträgt 1 bis 4 mm.

Die Korona-Behandlung erfolgt vorzugsweise mit 6 bis 12 kV. Die Frequenz liegt etwa bei 15 kHz. Die Leistung des Generators zur Korona-Behandlung beträgt etwa 500 W.

Ein weiterer wesentlicher Aspekt der Erfindung besteht darin, daß die Dicke des Dielektrikums an der positiven und negativen Elektrode so gewählt ist, daß eine homogene, dreidimensionale Elektronenwolke, nämlich eine Koronaschicht, zwischen den Elektroden entsteht. Die Wahl der entsprechenden Dicke der Dielektrika trägt dazu bei, daß die von der einen zur anderen Elektrode fließenden Elektronen abgebremst werden und dadurch Beschädigungen, insbesondere Durchschläge, in den zu behandelnden Zuschnitten vermieden werden.

Wesentlich für eine beschädigungslose Vorbehandlung der textilen Flächengebilde durch das ionisierte Gas bzw. eine Korona oder ein Plasma ist weiterhin ein Luftspalt zwischen der Oberseite der vorzubehandelnden Flächengebilde und der ihr zugerichteten Fläche des Dielektrikums einer Elektrode, insbesondere einer positiven Elektrode. Dieser kann dadurch gebildet sein, daß die Außenfläche des Dielektrikums der entsprechenden Elektrode mit Abstand zur Oberfläche des äußeren Zuschnitts entlanggeführt wird. Dieser Luftspalt wird gebildet durch das Abdeckorgan, was zu diesem Zweck netzförmig ausgebildet ist. Gleichzeitig hält das netzförmige Abdeckorgan den oder die Zuschnitte während der Plasma- oder Korona-Behandlung plan oder drückt es gegen eine der Elektroden, vorzugsweise eine negative Elektrode.

## Patentansprüche

1. Verfahren zum Verbinden textiler Flächengebilde, wobei die miteinander zu verbindenen Flächengebilde unter Beaufschlagung von Wärme und/oder Druck vorzugsweise miteinander verklebt werden, dadurch gekennzeichnet, daß mindestens eines der jeweils zu verbindenden Flächengebilde in einem Luftspalt mit einem ganz oder teilweise ionisierten Gas und/der einer Korona bzw. einem Plasma vorbehandelt und während dieser Vorbehandlung mindestens im Bereich des Luftspalts niedergehalten wird.

2. Verfahren nach Anspruch 1, dadurch gekennzeichnet, daß die textilen Flächengebilde mittels einer vorzugsweise homogenen, räumlichen Koronawolke und/oder Plasmawolke vorbehandelt werden.

3. Verfahren nach Anspruch 1 oder 2, dadurch gekennzeichnet, daß die Vorbehandlung zwischen zwei Elektroden erfolgt, wobei mindestens eine Elektrode mit einem Dielektrikum versehen ist.

4. Verfahren nach einem oder mehreren der Ansprüche 1 bis 3, dadurch gekennzeichnet, daß bei der Vorbehandlung mindestens zwischen einer Elektrode bzw. dem Dielektrikum derselben und der diesem zugewandten Fläche des textilen Flächengebildes wenigstens bereichsweise der Luftspalt gebildet ist.

5. Verfahren nach einem oder mehreren der Ansprüche 1 bis 4, dadurch gekennzeichnet, daß die textilen Flächengebilde bei der Vorbehandlung durch das Niederhalten flachgehalten werden.

6. Verfahren nach einem oder mehreren der Ansprüche 1 bis 5, dadurch gekennzeichnet, daß die Flächengebilde bei der Vorbehandlung durch mindestens bereichsweises Abdecken niedergehalten und/oder flachgehalten werden.

7. Verfahren nach einem oder mehreren der Ansprüche 1 bis 6, dadurch gekennzeichnet, daß die textilen Flächengebilde niedergehalten bzw. abgedeckt werden durch ein Abdeckorgan, das während der Vorbehandlung zwischen dem Flächengebilde und einer Elektrode bzw. dem der Elektrode zugeordneten Dielektrikum vorzugsweise kontinuierlich hindurchgeführt wird.

8. Verfahren nach einem oder mehreren der Ansprüche 1 bis 7, dadurch gekennzeichnet, daß die zur Vorbehandlung dienende Korona oder ein Plasma vor dem Auftreffen auf die vorzubehandelnden Flächengebilde abgebremst werden, vorzugsweise derart, daß die Oberfläche des Dielektrikums einer Elektrode, insbesondere einer positiven Elektrode, von der ihr zugerichteten Außenfläche der Flächengebilde beabstandet wird.

9. Verfahren nach einem oder mehreren der Ansprüche 1 bis 8, dadurch gekennzeichnet, daß die Oberfläche des Dielektrikums von der ihr zugerichteten Außenfläche der jeweiligen Flächengebilde durch das vorzugsweise nicht-leitende Abdeckorgan beabstandet wird.

10. Verfahren nach einem oder mehreren der Ansprüche 1 bis 9, dadurch gekennzeichnet, daß vor und/oder während der Vorbehandlung eine Erwärmung der textilen Flächengebilde erfolgt zur (leichten) Vorverklebung der textilen Flächengebilde.

11. Vorrichtung zum Verkleben textiler Flächengebilde mit mindestens einer Anlegestation (25), einer Verklebungsstation (27) sowie mindestens einem Förderer zum Transport der textilen Flächengebilde zur und durch die Verklebungsstation (27), gekennzeichnet durch eine Vorbehandlungsstation (26), die mindestens zwei Elektroden (35, 36) und ein Abdeckorgan (40) zur Bildung eines Luftspalts aufweist, wobei die Elektroden (35, 36) mindestens einen Abstand aufweisen, der der Dicke der zu verbindenden textilen Flächengebilde und des Abdeckorgans entspricht.

12. Vorrichtung nach Anspruch 11, dadurch gekennzeichnet, daß die Vorbehandlungsstation (26) vor der Verklebungsstation (27) angeordnet ist, insbesondere zwischen der Anlegestation (25) und der Verklebungsstation (27).

13. Vorrichtung nach Anspruch 11 oder 12, dadurch gekennzeichnet, daß mindestens eine Elektrode (35) ein Dielektrikum aufweist.

14. Vorrichtung nach einem oder mehreren der Ansprüche 11 bis 13, dadurch gekennzeichnet, daß das Abdeckorgan (40) eine äußere Fläche des vorzubehandelnden Flächengebildes bzw. der vorzubehandelnden Flächengebilde mindestens teilweise überdeckt.

15. Vorrichtung nach einem oder mehreren der Ansprüche 11 bis 14, dadurch gekennzeichnet, daß das Abdeckorgan (40) aus einem Öffnungen aufweisenden nicht-leitenden Material gebildet ist, vorzugsweise ein Netz ist.

16. Verwendung einer Korona oder eines Plasmas zur Haftverbesserung von mit Einlagenzuschnitten zu verklebenden Oberstoffzuschnitten für Oberbekleidungsstücke.

## Claims

1. Method for connecting textile webs, the webs to be connected to one another preferably being bonded to one another with the application of heat and/or pressure, characterized in that at least one of the webs which are in each case to be connected is pretreated in an air gap with an entirely or partially ionized gas and/or a corona or a plasma and is held down at least in the area of the air gap during this pretreatment.

2. Method according to Claim 1, characterized in that the textile webs are pretreated by means of a preferably homogeneous, three-dimensional corona cloud and/or plasma cloud.

3. Method according to Claim 1 or 2, characterized in that the pretreatment takes place between two electrodes, at least one electrode being provided with a dielectric.

4. Method according to one or more of Claims 1 to 3, characterized in that, during the pretreatment, the air gap is formed at least in places at least between an electrode, or its dielectric, and the surface of the textile web facing it.

5. Method according to one or more of Claims 1 to 4, characterized in that the textile webs are kept flat during the pretreatment by being held down.

6. Method according to one or more of Claims 1 to 5, characterized in that the webs are held down and/or are held flat during the pretreatment by being covered at least in places.

7. Method according to one or more of Claims 1 to 6, characterized in that the textile webs are held down or are covered by a covering element which, during the pretreatment, is passed preferably continuously through between the web and an electrode or the dielectric associated with the electrode.

8. Method according to one or more of Claims 1 to 7, characterized in that the corona, used for the pretreatment or a plasma is braked before it strikes the webs to be pretreated, preferably in such a manner that the surface of the dielectric of one electrode, preferably of a positive electrode, is at a distance from the outer surface of the webs facing it.

9. Method according to one or more of Claims 1 to 8, characterized in that the preferably non-conductive covering element keeps the surface of the dielectric at a distance from the outer surface of the respective webs facing it.

10. Method according to one or more of Claims 1 to 9, characterized in that, before and/or during the pretreatment, the textile webs are heated for (easy) initial bonding of the textile webs.

11. Apparatus for bonding textile webs having at least one guide station (25), one bonding station (27) and at least one conveyor for transporting textile webs to and through the bonding station (27), characterized by a pretreatment station (26) which has at least two electrodes (35, 36) and a covering element (40) in order to form an air gap, the electrodes (35, 36) being at least at a distance apart which corresponds to the thickness of the textile webs to be connected or of the covering element.

12. Apparatus according to Claim 11, characterized in that the pretreatment station (26) is arranged upstream of the bonding station (27), in particular between the guide station (25) and the bonding station (27).

13. Apparatus according to Claim 11 or 12, characterized in that at least one electrode (35) has a dielectric.

14. Apparatus according to one or more of Claims 11 to 13, characterized in that the covering element (40) at least partially covers an outer surface of the web to be pretreated or of the webs to be pretreated.

15. Apparatus according to one or more of Claims 11 to 14, characterized in that the covering element (40) is formed from a non-conductive material having openings, preferably mesh.

16. Use of a corona or a plasma to improve the adhesion of outer layer pattern pieces, to be bonded to lining pattern pieces, for outer garments.

## Revendications

1. Procédé d'assemblage d'étoffes dans lequel les étoffes à assembler sont collées de préférence ensemble avec action de chaleur et/ou de pression, caractérisé par le fait qu'au moins une des étoffes à assembler est prétraitée dans un intervalle d'air avec un gaz entièrement ou partiellement ionisé et/ou un effluve ou un plasma et est, pendant ce prétraitement, tenue basse au moins dans la zone de l'intervalle d'air.

2. Procédé selon la revendication 1, caractérisé par le fait que les étoffes sont prétraitées au moyen d'un nuage d'effluve et/ou d'un nuage de plasma tridimensionnel de préférence homogène.

3. Procédé selon l'une des revendications 1 et 2, caractérisé par le fait que le prétraitement est effectué entre deux électrodes dont au moins une est pourvue d'un diélectrique.

4. Procédé selon une ou plusieurs des revendications 1 à 3, caractérisé par le fait que, lors du prétraitement, l'intervalle d'air est formé au moins par endroits au moins entre une électrode, ou le diélectrique de celle-ci, et la face dirigée vers celui-ci de l'étoffe.

5. Procédé selon une ou plusieurs des revendications 1 à 4, caractérisé par le fait que, lors du prétraitement, les étoffes sont maintenues à plat par le fait qu'elles sont tenues basses.

6. Procédé selon une ou plusieurs des revendications 1 à 5, caractérisé par le fait que, lors du prétraitement, les étoffes sont tenues basses et/ou maintenues à plat par couverture au moins par endroits.

7. Procédé selon une ou plusieurs des revendications 1 à 6, caractérisé par le fait que les étoffes sont tenues basses ou couvertes par un organe de couverture qui, pendant le prétraitement, passe de préférence de façon continue entre l'étoffe et une électrode ou le diélectrique associé à celle-ci.

8. Procédé selon une ou plusieurs des revendications 1 à 7, caractérisé par le fait que l'effluve servant au prétraitement ou un plasma est freiné avant de rencontrer les étoffes à prétraiter, de préférence de façon telle que la surface du diélectrique d'une électrode, en particulier d'une électrode positive, soit écartée de la face extérieure dirigée vers elle des étoffes.

9. Procédé selon une ou plusieurs des revendications 1 à 8, caractérisé par le fait que la surface du diélectrique est écartée de la face extérieure dirigée vers elle des étoffes par l'organe de couverture, qui est de préférence non conducteur.

10. Procédé selon une ou plusieurs des revendications 1 à 9, caractérisé par le fait qu'avant et/ou pendant le prétraitement est effectué un chauffage des étoffes pour un (léger) précollage de celles-ci.

11. Appareil de collage d'étoffes comportant au moins un poste de chargement (25), un poste de collage (27) et au moins un transporteur pour le transport des étoffes jusqu'au poste de collage (27) et à travers celui-ci, caractérisé par un poste de prétraitement (26) qui présente au moins deux électrodes (35, 36) et un organe de couverture (40) pour la formation d'un intervalle d'air, les électrodes (35, 36) étant au moins à une distance l'une de l'autre correspondant à l'épaisseur des étoffes à assembler et de l'organe de couverture.

12. Appareil selon la revendication 11, caractérisé par le fait que le poste de prétraitement (26) est placé avant le poste de collage (27), en particulier entre le poste de chargement (25) et le poste de collage (27).

13. Appareil selon l'une des revendications 11 et 12, caractérisé par le fait qu'au moins une électrode (35) présente un diélectrique.

14. Appareil selon une ou plusieurs des revendications 11 à 13, caractérisé par le fait que l'organe de couverture (40) couvre au moins partiellement une face extérieure de l'étoffe ou des étoffes à prétraiter.

15. Appareil selon une ou plusieurs des revendications 11 à 14, caractérisé par le fait que l'organe de couverture (40) est formé d'une matière non conductrice présentant des jours et est de préférence un filet.

16. Utilisation d'un effluve ou d'un plasma pour l'amélioration de l'adhérence de pièces d'étoffe de dessus pour vêtements de dessus à coller à des pièces de garniture.
